# EUROPÄISCHE PATENTSCHRIFT

(11) **EP 0 960 760 B1**
(45) Veröffentlichungstag und Bekanntmachung des Hinweises auf die Patenterteilung: **11.10.2000**
(21) Anmeldenummer: 98105307.7
(22) Anmeldetag: 24.03.1998
(51) Int. Cl.: B60J 1/17, E05F 11/38

(54) **Klemmhalterung für eine Sichtscheibe eines Kraftfahrzeuges**
Clamping means for a window of a motor vehicle
Dispositif de fixation pour une fenêtre de véhicule à moteur

(43) Veröffentlichungstag der Anmeldung: 01.12.1999
(73) Patentinhaber: Ford Global Technologies, Inc., A subsidiary of Ford Motor Company, Dearborn, Michigan 48126 (US)
(72) Erfinder: Schuetteler, Bruno, 50389 Wesseling (DE)
(74) Vertreter: Messulam, Alec Moses

(56) Entgegenhaltungen:
- EP-A- 0 304 583
- EP-A- 0 708 220
- DE-A- 2 843 633
- DE-A- 2 843 634
- DE-C- 4 239 779
- GB-A- 2 313 873

## Beschreibung

Die Erfindung bezieht sich auf eine Klemmhalterung für eine Sichtscheibe eines Kraftfahrzeuges, der im Oberbegriff des Patentanspruches 1 erläuterten Art.

Aus der DE 28 43 634 A1 ist eine Klemmhalterung für eine Sichtscheibe eines Kraftfahrzeuges der im Oberbegriff des Patentanspruches 1 erläuterten Art bekannt.

Die bekannte Klemmhalterung für eine Sichtscheibe eines Kraftfahrzeuges weist den Nachteil auf, daß die mit der Sichtscheibe einerseits und dem Mitnehmehalter und der Spannplatte zusammenwirkenden Zwischenlagen nur eine plane Oberfläche aufweisen, die ein ausrichten nicht besonders erleichtern.

Aus der GB 2 313 873 A ist ein Glashalter an einem Halteteil bekannt, der die Sichtscheibe mit Erhebungen aufweisenden Klemmwänden umfaßt, zur Einstellung der Sichtscheibe in der gewünschten Einbaulage ist jedoch eine zusätzliche Gelenkanordnung zwischen dem Mitnehmehalter und dem Fensterhebemechanismus erforderlich.

Die bekannte Klemmhalterung für eine Sichtscheibe eines Kraftfahrzeuges weist jedoch den Nachteil auf, daß die Montage der Sichtscheibe in der Klemmhalterung durch deren einzelne Bauteile schwierig und arbeitsintensiv ist.

Die Aufgabe der Erfindung ist es, eine Klemmhalterung für eine Sichtscheibe eines Kraftfahrzeuges zu schaffen, die eine einfachere Montage der Sichtscheibe in der Klemmhalterung ermöglicht und gleichzeitig beim Befestigen der Anordnung für ein selbsttätiges Ausrichten der Sichtscheibe zur Klemmhalterung sorgt.

Gemäß der Erfindung wird diese Aufgabe gelöst, indem bei einer Klemmhalterung bei einer Sichtscheibe eines Kraftfahrzeuges der im Oberbegriff des Patentanspruches 1 erläuterten Art, die im Kennzeichenteil des Patentanspruches 1 aufgezeigten Merkmale vorgesehen werden.

Dadurch, daß eine Klemmhalterung für eine Sichtscheibe eines Kraftfahrzeuges, bei der an einem Fensterhebermechanismus eine Sichtscheibe höhenverstellbar geführt ist und von einer Klemmhalterung, bestehend aus einem Mitnehmehalter mit zumindest einer konkaven Oberfläche und einer Spannplatte über ein Befestigungselement unter Einschaltung von Zwischenlagen in einer durch eine Vorrichtung bestimmten Einbaulage gehalten ist, ist der Mitnehmehalter und die Spannplatte jeweils mit einem Paar von zur Sichtscheibe hin konkaven oberen und unteren Ausnehmungen versehen und die Spannplatte ist über eine prismatische Führung am Mitnehmehalter parallel zu diesen gehalten, die Sichtscheibe ist unter unmittelbarer Einschaltung von an ihren Außenflächen zu den konkaven Ausnehmungen korrespondierende konkave obere und untere Erhebungen aufweisenden Zwischenlagen erfaßt und die Sichtscheibe ist bei durch eine Vorrichtung in gewünschter Einbaulage gehaltenen Lage, durch Anziehen des Befestigungselementes unter selbsttätiger Verlagerung der Zwischenlagen in der eingestellten Lage festklemmbar, so wird eine Klemmhalterung geschaffen, deren Bauteile bei der Montage zusammenhalten und sich selbständig einstellen.

In den weiteren Patentansprüchen sind zweckmäßige Einzelheiten der Erfindung erläutert.

Die Erfindung wird anhand eines in der beiliegenden Zeichnung gezeigten Ausführungsbeispieles näher erläutert. Es zeigt:
- Fig. 1: einen vertikalen Schnitt durch eine Klemmhalterung für eine Sichtscheibe eines Kraftfahrzeuges gemäß der Erfindung.
- Fig. 2: einen ähnlichen Schnitt wie Fig. 1 bei in Einstellage festgeklemmter Sichtscheibe und

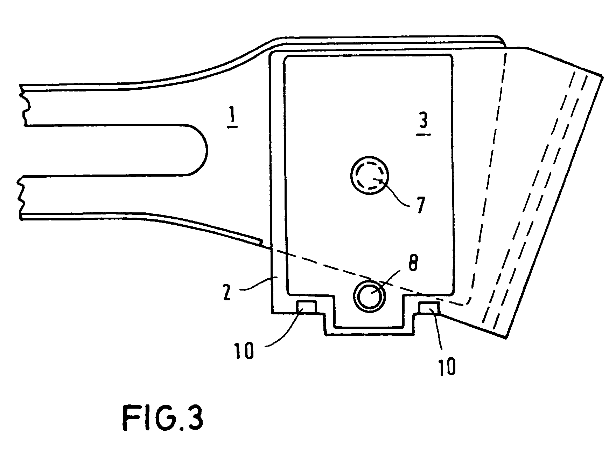

- Fig. 3: eine Seitenansicht der erfindungsgemäßen Klemmhalterung.

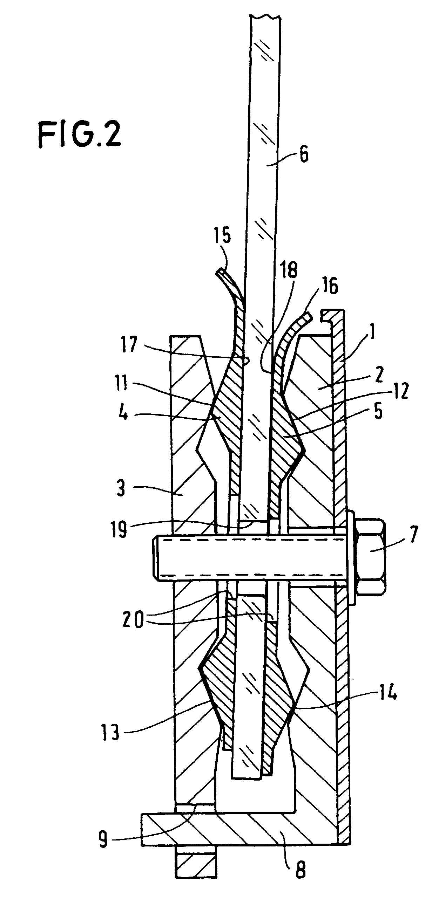

Die Klemmhalterung für eine Sichtscheibe eines Kraftfahrzeuges besteht aus einem in nicht näher dargestellter Weise mit einem Bauteil 1 eines Fensterhebermechanismus verbundenen Mitnehmehalter 2 und aus einer Spannplatte 3, die unter Einschaltung von Zwischenlagen 4 und 5 auf die Sichtscheibe 6 einwirkt, deren eingestellte Lage aus Fig. 2 ersichtlich ist.

Der Mitnehmehalter 2 wird mit der Spannplatte 3 über ein Befestigungselement 7 in Form eines üblichen Schraubenbolzens verspannt.

Im Gegensatz zu der bekannten Klemmhalterung, bei der die verschiedenen Einzelteile lose vorliegen und erst bei der Montage in der richtigen Reihenfolge zusammengefügt werden müssen, ist gemäß der Erfindung die Spannplatte 3 über eine parallele Führung bestehend aus einem Führungsbolzen 8, der mit einer Bohrung zusammenwirkt und durch seitliche Stege 10, die mit der Unterkante der Spannplatte 3 zusammenwirken, geführt.

Die zur Sichtscheibe 6 gerichteten Flächen des Mitnehmehalters 2 und der Spannplatte 3 weisen hier zylindrisch-konkave Ausnehmungen 11, 12 und 13, 14 auf, die zum Befestigungselement 7 hin symmetrisch angeordnet sind.

Die Zwischenlagen 4 und 5 weisen mit den konkaven Ausnehmungen 11 und 12 korrespondierende, konvexe obere und untere Erhebungen 13 und 14 auf, die wieder symmetrisch zum Befestigungselement 7 unterhalb und oberhalb desselben angeordnet sind.

Die miteinander zusammenwirkenden Oberflächen der konkaven Ausnehmungen 11 und 12 und der konvexen Erhebungen 13 und 14 können hierbei Riffelungen oder Rillungen aufweisen, die nach erfolgter Verstellung ein Festhalten der verschobenen Lage beim Anziehen des Befestigungselementes 7 begünstigen.

An den Zwischenlagen 4 und 5 sind an deren oberen Ende einen Montagetrichter bildende, nach außen weisende Wölbung 15 und 16 vorgesehen, die in die zur Sichtscheibe 6 liegenden Anlageflächen 17 und 18 laufen, die Sichtscheibe 6 wird also bei der Montage trichterförmig zwischen die Zwischenlagen 4 und 5 geführt.

Es wird noch darauf hingewiesen, daß die Sichtscheibe 6 im Bereich des Durchtritts des Befestigungsmittels 7 ebenso wie die Zwischenlagen 4 und 5 mit vergrößerten, ggf. langlochartigen Durchtrittsöffnungen 19 bzw. 20 versehen sind.

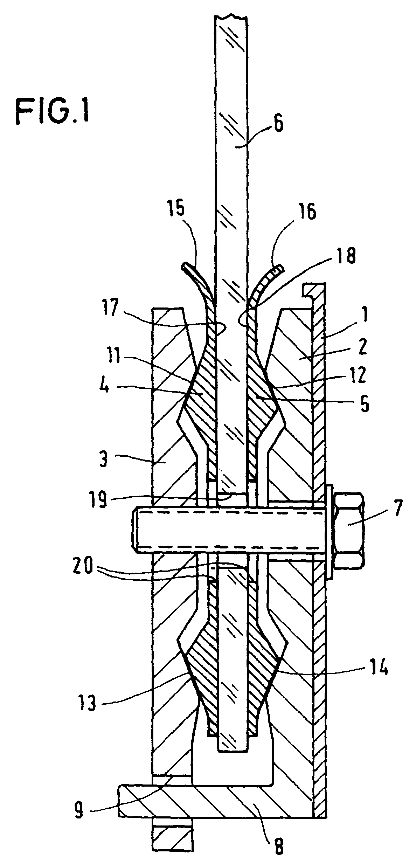

Bei dem in der Fig. 1 gezeigten Ausführungsbeispiel bilden die konkaven Ausnehmungen 11 und 12 und die konvexen Erhebungen 13 und 14 teilzylindrisch Flächen, deren Mittelpunkte auf der verlängerten Achse des Befestigungselementes 7 liegen. Es ist jedoch in gleicher Weise möglich, daß die konkaven Ausnehmungen und konvexen Erhebungen als Keilflächen oder als Teil-Kugelflächen ausgebildet sind, wobei diese nicht nur ein Ausrichten entlang einer Zylinderoberfläche, sondern ein mehrdimensionales Ausrichten entlang einer Kugeloberfläche ermöglichen.

Bei der Montage befindet sich der Mitnehmehalter 2 und die Spannplatte 3 in auseinandergedrückten Lage und dementsprechend kann die Sichtscheibe 6 von oben durch den sogenannten Fensterschacht der Tür eines Kraftfahrzeuges, unterstützt durch die Wölbungen 15 und 16, einfach zwischen die beiden Befestigungsbauteile 2 und 3 eingefügt werden. Darauffolgend wird die Sichtscheibe 6 entweder von Hand, oder besser noch von einer Vorrichtung in die, in Zusammenwirken mit den Dichtungen an der Fensteröffnung der Karosserie, gewünschten Lage gebracht und fixiert und darauffolgend wird das Befestigungselement 7 durch die entsprechenden Öffnungen 19 und 20 in der Sichtscheibe 6 und in den Zwischenlagen 4 und 5 eingeführt und in der Gewindebohrung der Spannplatte 3 eingeschraubt. Hierdurch werden die Zwischenlagen 4 und 5 näher an die Sichtscheibe 6 herangebracht und bewirken hierdurch ein Verlagern der konvexen Erhebungen 13 und 14 in den konkaven Ausnehmungen 11 und 12 in der in Fig. 2 angedeuteten Art. Bei weiterem Festziehen des Befestigungselementes 7 werden die nunmehr in ihre endgültige verschobene Position verlagerten Zwischenlagen 4 und 5 festgeklemmt.

Bei der erfindungsgemäßen Vorrichtung ist somit keinerlei zusätzliche Handhabung notwendig, um die Ausrichtung der Zwischenlagen 4 und 5 gegenüber den Bauteilen der Klemmhalterung, dem Mitnehmerhalter 1 und der Spannplatte 3 zu bewirken.

## Patentansprüche

1. Klemmhalterung für eine Sichtscheibe eines Kraftfahrzeuges, bei der an einem Fensterhebermechanismus (1) eine Sichtscheibe (6) höhenverstellbar geführt ist und von einer Klemmhalterung, bestehend aus einem Mitnehmehalter (2) mit zumindest einer Oberfläche und einer Spannplatte (3) über ein Befestigungselement (7) unter Einschaltung von Zwischenlagen (4 und 5) in einer durch eine Vorrichtung bestimmten Einbaulage gehalten ist, wobei die Sichtscheibe (6) unter unmittelbarer Einschaltung von an ihren Außenflächen anliegenden Zwischenlagen (4 und 5) erfaßt ist und die Sichtscheibe (6) bei durch eine Vorrichtung in gewünschter Einbaulage gehalten, durch Anziehen des Befestigungselementes (7) und unter selbsttätiger Verlagerung der Zwischenlagen (4 und 5) in der eingestellten Lage festklemmbar ist,
**dadurch gekennzeichnet**, daß
- der Mitnehmehalter (2) und die Spannplatte (3) jeweils ein Paar von zur Sichtscheibe (6) hin konkaven oberen und unteren Ausnehmung (11 bzw. 12) aufweisen
- Die Zwischenlagen (4 und 5) zu den konkaven Ausnehmungen (11 bzw. 12) korrespondierende konvexe obere und untere Erhebungen (13 bzw. 14) aufweisen und
- die Spannplatte (3) über eine parallele Führung (8/9) am Mitnehmehalter (2) parallel zu diesen geführt ist.

2. Klemmhalterung für eine Sichtscheibe eines Kraftfahrzeuges nach den Anspruch 1,
**dadurch gekennzeichnet**, daß
- die Zwischenlagen (4 und 5) an ihren oberen, zum Scheibenschacht der Tür gerichteten Ende mit nach außen verlaufenden Wölbungen (15 und 16) versehen sind, die einen in die zur Sichtscheibe (6) liegenden Anlageflächen (17 und 18) übergehenden Montagetrichter bilden.

3. Klemmhalterung für eine Sichtscheibe eines Kraftfahrzeuges nach den Ansprüchen 1 und 2,
**dadurch gekennzeichnet**, daß
- die an dem Mitnehmehalter (2) und der Spannplatte (3) ausgeformten konkaven Ausnehmungen (11 und 12) und die an den Zwischenlagen (4 und 5) ausgebildeten konvexen Erhebungen (13 und 14) teilzylindrische Oberflächen aufweisen, deren Mittelpunkte etwa auf der verlängerten Achse des Befestigungselementes (7) liegen.

4. Klemmhalterung für eine Sichtscheibe eines Kraftfahrzeuges nach den Ansprüchen 1 bis 3,
**dadurch gekennzeichnet**, daß
- die am Mitnehmehalter (2) an der Spannplatte (3) ausgebildeten zusammenwirkenden konkaven und konvexen Erhebungen von Teilkugelflächen gebildet sind, deren Kugelmittelpunkte etwa auf der Achse des Befestigungselementes (7) liegen.

## Claims

1. Clamp-type mount for a pane of a motor vehicle in which a pane (6) is guided so as to be vertically adjustable at a window lifter mechanism (1) and is held in a fitted position, determined by a device, by a clamp-type mount consisting of an engaging holder (2) with at least one surface and a clamping plate (3) via a securing element (7), with interlayers (4 and 5) being interposed, wherein the pane (6) is gripped with the direct interposition of interlayers (4 and 5) bearing against its outer faces, and, being held in the desired fitted position by a device, the pane (6) can be clamped in the set position by tightening the securing element (7) and with automatic displacement of the interlayers (4 and 5),
characterised in that
- the engaging holder (2) and the clamping plate (3) each comprise a pair of upper and lower recesses (11 and 12), which are concave towards the pane (6),
- the interlayers (4 and 5) comprise convex upper and lower elevations (13 and 14) corresponding to the concave recesses (11 and 12) and
- the clamping plate (3) is guided via a parallel guide (8/9) at the engaging holder (2) parallel to the latter.

2. Clamp-type mount for a pane of a motor vehicle according to claim 1,
characterised in that
- the interlayers (4 and 5) are provided at their upper end, which is directed towards the pane shaft of the door, with outward extending curvatures (15 and 16), which form a mounting funnel passing into the contact faces (17 and 18) lying towards the pane (6).

3. Clamp-type mount for a pane of a motor vehicle according to claims 1 and 2,
characterised in that
- the concave recesses (11 and 12) formed at the engaging holder (2) and the clamping plate (3) and the convex elevations (13 and 14) formed at the interlayers (4 and 5) comprise part-cylindrical surfaces whose centre points lie approximately on the extended axis of the securing element (7).

4. Clamp-type mount for a pane of a motor vehicle according to claims 1 to 3,
characterised in that
- the co-operating concave and convex elevations formed at the engaging holder (2) at the clamping plate (3) are formed by part-spherical faces whose centre points lie approximately on the axis of the securing element (7).

## Revendications

1. Dispositif de fixation par serrage pour une vitre de véhicule à moteur, avec lequel une vitre (6) est guidée en déplacement vertical sur un mécanisme de lève-vitre (1), et est maintenue par un dispositif de fixation par serrage, constitué d'un support entraîneur (2) ayant au moins une surface et d'une plaque de serrage (3), au moyen d'un élément de fixation (7) et avec intercalation de couches intermédiaires (4 et 5), dans une position de montage déterminée par un appareil, la vitre (6) étant embrassée avec intercalation directe de couches intermédiaires (4 et 5) appliquées contre ses faces extérieures et la vitre (6), maintenue par un appareil dans la position de montage souhaitée, pouvant être bloquée par serrage dans la position réglée en serrant l'élément de fixation (7) et avec décalage automatique des couches intermédiaires (4 et 5),
**caractérisé** en ce que
- le support entraîneur (2) et la plaque de serrage (3) présentent respectivement une paire d'évidements concaves supérieurs et inférieurs (11, 12) tournés vers la vitre (6),
- les couches intermédiaires (4 et 5) présentent des bossages convexes supérieurs et inférieurs (13, 14) en correspondance avec les évidements concaves (11, 12), et
- la plaque de serrage (3) est guidée sur le support entraîneur (2) en parallèle avec lui au moyen d'un guidage parallèle (8/9).

2. Dispositif de fixation par serrage pour une vitre de véhicule à moteur selon la revendication 1, **caractérisé** en ce que les couches intermédiaires (4 et 5) sont pourvues, à leur extrémité supérieure tournée vers le puits de vitre de la porte, de cambrures (15 et 16) s'étendant vers l'extérieur, qui forment un entonnoir de montage se poursuivant par des faces d'application (17 et 18) appliquées contre la vitre (6).

3. Dispositif de fixation par serrage pour une vitre de véhicule à moteur selon les revendications 1 et 2, **caractérisé** en ce que les évidements concaves (11 et 12) formés sur le support entraîneur (2) et sur la plaque de serrage (3) et les bossages convexes (13 et 14) formés sur les couches intermédiaires (4 et 5) présentent des surfaces en forme de cylindres partiels dont les centres se trouvent environ sur le prolongement de l'axe de l'élément de fixation (7).

4. Dispositif de fixation par serrage pour une vitre de véhicule à moteur selon les revendications 1 à 3, **caractérisé** en ce que les bossages coopérants concaves et convexes formés sur le support entraîneur (2) et sur la plaque de serrage (3)sont formés par des faces partielles de sphères dont les centres se trouvent environ sur l'axe de l'élément de fixation (7).
